# EUROPÄISCHE PATENTSCHRIFT

(11) **EP 2 225 071 B1**
(45) Veröffentlichungstag und Bekanntmachung des Hinweises auf die Patenterteilung: **26.11.2014**
(21) Anmeldenummer: 08854209.7
(22) Anmeldetag: 29.09.2008
(51) Int. Cl.: B25D 17/06, B25D 11/06, F16C 33/14, F16C 35/02

(54) **HANDWERKZEUGMASCHINE**
HAND-HELD POWER TOOL
MACHINE-OUTIL À MAIN

(30) Priorität: 29.11.2007 DE 102007057453
(43) Veröffentlichungstag der Anmeldung: 08.09.2010
(73) Patentinhaber: Robert Bosch GmbH, 70442 Stuttgart (DE)
(72) Erfinder: STORM, Thomas, 01237 Dresden (DE); EICHELROTH, Frank, 01159 Dresden (DE); HEGEMANN, Bernhard, 70794 Filderstadt (DE); BERNHARDT, Thomas, 72631 Aichtal-Groetzingen (DE); RUEBSAAMEN, Holger, 70188 Stuttgart (DE); SCHLEGEL, Andreas, 70771 Leinfelden-Echterdingen (DE)
(86) Internationale Anmeldenummer: PCT/EP2008/063024
(87) Internationale Veröffentlichungsnummer: WO 2009/068344

(56) Entgegenhaltungen:
- DE-A1- 19 801 986
- DE-A1-102005 026 614

## Beschreibung

Die Erfindung betrifft eine Handwerkzeugmaschine gemäß dem Oberbegriff des Anspruches 1.

### Stand der Technik

Handwerkzeugmaschinen der vorgenannten Art mit einem Abtriebsglied, das in einem Lagerring geführt ist, welcher in einer ringförmigen, umschließenden Lageraufnahme angeordnet ist, sind aus der Praxis bekannt. Der den Lagerring umschließende Teil der Lageraufnahme ist durch das freie Ende eines vom Abtriebsglied durchsetzten Halses eines Zwischenflansches gebildet. Ein radialer Zugriff auf das Abtriebsglied, sei es zum Antrieb und/oder in Verbindung mit der Montage, ist infolge der geschlossenen Ausbildung von Lagerring und Lageraufnahme lediglich außerhalb des Bereiches der Lageraufnahme möglich. Dies beeinträchtigt die Montagemöglichkeiten sowie die Möglichkeiten für den antriebsseitigen Zugriff auf das Abtriebsglied und setzt für den Zwischenflansch bei Positionierung des Antriebszugriffes im Bereich des Zwischenflansches eine entsprechende Baulänge voraus.

DE 198 01 986 A1 offenbart eine Handwerkzeugmaschine mit den Merkmalen des Oberbegriffs des Anspruchs 1.

### Offenbarung der Erfindung

Der Erfindung liegt, bezogen auf eine Handwerkzeugmaschine der eingangs genannten Art, die Aufgabe zugrunde, die Zugriffsmöglichkeiten auf das Abtriebsglied zu erweitern, ohne damit die Montage des Lagerringes in der Lageraufnahme zu erschweren und/oder die Führungsqualität des Lagerringes für das Abtriebsglied zu beeinträchtigen.

Gemäß der Erfindung wird dies bei einer Handwerkzeugmaschine gemäß dem Anspruch 1 erreicht.

Bei der erfindungsgemäßen Handwerkzeugmaschine sind die Lageraufnahme und der Lagerring in offener Ringform mit in Überdeckung zueinander liegenden, ausgesparten Ringsektoren ausgebildet und es ist der ausgesparte Ringsektor des Lagerringes dadurch gebildet, dass aus dem Lagerring ein über als Soll-Bruchstellen ausgebildeten Trennstellen abgegrenzter Umfangsabschnitt herausgetrennt, insbesondere herausgebrochen ist.

Diese Ausbildung des Lagerringes macht es möglich, diesen als geschlossenen Lagerring nicht nur herzustellen, sondern auch passend in die umgreifende, kreis- oder ovalringförmige Lageraufnahme einzusetzen, so dass der Lagerring, ungeachtet herstellungs- und/oder materialbedingter Eigenspannungen, zum Einsetzen in die Lageraufnahme in seiner Sollform vorliegt und aufgrund der Abstützung in der Lageraufnahme die herstellungsgegebene und auf die formhaltige Abstützung in der Lageraufnahme ausgelegte Form auch beibehält, wenn durch Entfernen, insbesondere Herausbrechen des über vorgegebene Trennstellen, insbesondere Soll-Bruchstellen, abgegrenzten Umfangsabschnittes die offene Ringform hergestellt wird.

Damit sind für die Montage die gleichen Voraussetzungen gegeben wie bei einem geschlossenen Lagerring und, entsprechend abgestimmte Maßverhältnisse vorausgesetzt, kann der Lagerring entsprechend den jeweils gegebenen Passungen in die Lageraufnahme behinderungsfrei eingesetzt werden. Etwaige material- oder herstellungsbedingte Eigenspannungen im Lagerring, die bei offener Ringform zu Abweichungen von der vorgegebenen Sollform führen können, bleiben somit auf die Montage ohne Auswirkung und kommen letztlich auch nach dem Herausbrechen des über die Soll-Bruchstellen abgegrenzten Umfangsabschnittes in die Führungsqualität des Lagerringes für das Abtriebsglied beeinträchtigendem Maße nicht zum Tragen, da die Lageraufnahme für den nunmehr offenen Lagerring eine formhaltige Abstützung bildet, die gegebenenfalls auch zur formschlüssigen Verankerung des Lagerringes in der Lageraufnahme hinreichend ist. Für eine solche Verankerung, insbesondere eine drehfeste Festlegung des Lagerringes, können gegebenenfalls auch zusätzlich, bevorzugt stirnseitig auch Nuten vorgesehen sein, die mit entsprechenden, seitens der Lageraufnahme vorgesehenen Gegenstücken die erforderliche Fixierung, gegebenenfalls auch axiale Positionierung des Lagerringes sicherstellen.

Das Montageverfahren ist insbesondere für Lagerringe zweckmäßig, die, bevorzugt als Gleitlagerringe, aus spröden, vor allem sprödbrechenden Materialien bestehen. In Frage kommen als solche Materialien insbesondere Sintermaterialien oder andere zu Sprödbruch neigende Materialien, bei denen sich in der Herstellung gegebenenfalls auch Eigenspannungen ergeben, die im aufgebrochenen Zustand des Lagerringes Abweichungen von der Sollform zur Folge haben können.

Die Soll-Bruchstellen können im Rahmen der Erfindung durch im Innen- und/oder Außenumfang des Lagerrings vorgesehene Kerben, gegebenenfalls in Überdeckung zueinander liegende Kerben gebildet sein, so dass nur vergleichsweise dünne Stege verbleiben.

In Verbindung mit einseitig, insbesondere innenseitig vorgesehenen Kerben kann es zweckmäßig sein, im Überdeckungsbereich zur jeweiligen Kerbe am Außenumfang des Lagerringes eine Aufdickung vorzusehen, um bei der Herstellung ungeachtet der Einkerbung einen durchlaufend im Wesentlichen gleichbleibenden Materialquerschnitt zu erreichen. Die Aufdickung lässt sich im Anschluss an die Herstellung, also zum Beispiel im Anschluss an die Verpressung bei Sintermaterialien, durch Schleifen, Überdrehen oder dergleichen Bearbeitungsverfahren in einfacher Weise abtragen.

In Bezug auf die Verdrehsicherung des Lagerringes kann es zweckmäßig sein, diesen auch mit stirnseitigen Einkerbungen zu versehen, denen an der jeweiligen Lageraufnahme entsprechende Gegenstücke zugeordnet sind.

Weitere Vorteile und zweckmäßige Ausführungen sind den Ansprüchen, der Figurenbeschreibung und den Zeichnungen zu entnehmen. Es zeigen:
- Fig. 1: als Beispiel einer erfindungsgemäß ausgestalteten Handwerkzeugmaschine einen Bohrhammer in vereinfachter Darstellung,
- Fig. 2: in perspektivischer Darstellung einen Zwischenflansch des Bohrhammers, der auslaufend auf sein werkzeugseitiges Ende eine Lagerung mit einer Lageraufnahme für einen Lagerring aufweist, der das mit dem Werkzeug zu verbindende Abtriebsglied führt,
- Fig. 3 und 4: Darstellungen des Lagerrings in Perspektive und stirnseitiger Ansicht,
- Fig. 5: eine vergrößerte Darstellung des Ausschnittes V in Fig. 4,
- Fig. 6: eine vergrößerte Teildarstellung eines Lagerringes in Draufsicht, bei der ein innenseitig angekerbter Bereich des Lagerrings außenseitig aufgedickt ist, und
- Fig. 7: eine weitere perspektivische Darstellung eines Lagerrings.

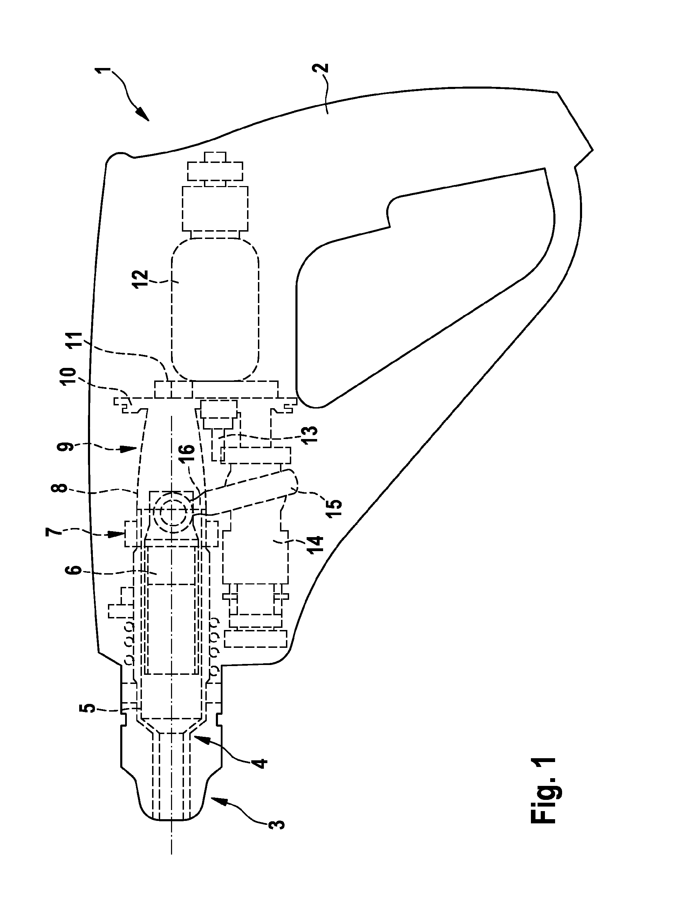

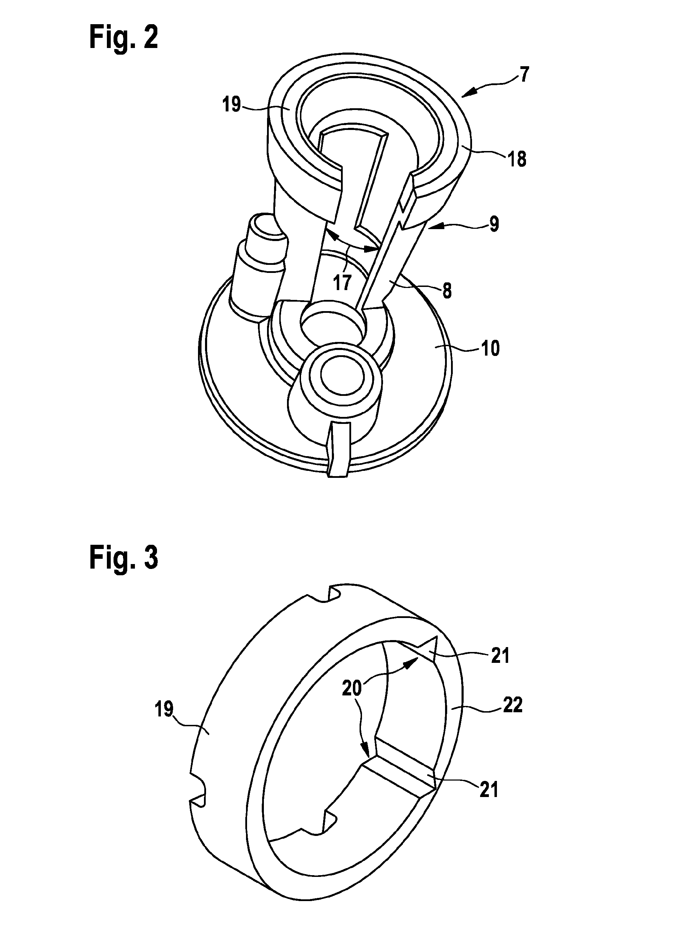

Als Handwerkzeugmaschine ist in Fig. 1 schematisiert ein Bohrhammer 1 dargestellt, der an seinem dem Handgriff 2 gegenüberliegenden werkzeugseitigen Arbeitsende 3 eine einem Abtriebsglied 4 zugeordnete Werkzeugaufnahme aufweist. Das Abtriebsglied 4 ist durch ein Hammerrohr 5 gebildet, das rückseitig zur Werkstückaufnahme einen oszillierend, insbesondere hubbeweglich oszillierend angetriebenen Hammerkolben 6 aufnimmt und das an seinem von der Werkzeugaufnahme abgelegenen Ende über eine Lagerstelle 7 am Hals 8 eines Zwischenflansches 9 abgestützt ist. Der Zwischenflansch 9 weist eine Fußplatte 10 auf, die mit der abtriebsseitigen Stirnplatte 11 des als Antrieb vorgesehenen E-Motores 12 verbunden ist, dessen Abtriebswelle 13 eine Zwischenwelle 14 antreibt. Die Zwischenwelle 14 trägt über ein Taumellager 15 einen Taumelfinger 16, der den Hals 8 des Zwischenflansches 9 durchgreifend am Hammerkolben 6 angreift. Entsprechend der Taumelbewegung, also der Hub-Schwenkbewegung des Taumelfingers 16 ist der vom Taumelfinger 16 durchgriffene, ringförmige Hals 8 gemäß Fig. 2 zumindest über einen wesentlichen Teil seiner Länge über einen Ringsektor 17 ausgespart, wobei diese Aussparung sich auch über den Bereich der Lagerstelle 7 erstreckt, die am zur Fußplatte 10 des Zwischenflansches 9 gegenüberliegenden Ende des Halses 8 vorgesehen ist. Gebildet ist diese Lagerstelle 7 durch eine am Hals 8 vorgesehene und zum Hals 8 nach außen stufig abgesetzte Lageraufnahme 18, in die ein Lagerring 19 eingesetzt ist, wobei in der Darstellung gemäß Fig. 2 der ausgesparte Ringsektor 17 über den Hals 8 und die Lagerstelle 7 bei im Wesentlichen gleichem Verlauf durchlaufend dargestellt ist.

Bezogen auf den Zwischenflansch 9 kann die Aussparung des dem Ringsektor 17 entsprechenden Umfangsabschnittes herkömmlicherweise bei der Herstellung, zum Beispiel im Druckgussverfahren, ausgebildet werden. Es ist aber auch möglich, aus dem zunächst geschlossen hergestellten Hals 8 des Zwischenflansches 9 nachträglich einen dem auszusparenden Ringsektor 17 entsprechenden Umfangsabschnitt herauszutrennen, insbesondere herauszuarbeiten oder herauszubrechen.

In die über den ausgesparten Ringsektor 17 geöffnete Lageraufnahme 18 wird der Lagerring 19 axial eingesetzt, und zwar als geschlossener Lagerring, dessen in Überdeckung zum ausgesparten Umfangsabschnitt der Lageraufnahme 18 liegender Umfangsabschnitt 22 über Trennstellen, insbesondere Soll-Bruchstellen 20, abgegrenzt ist, wie sie bezogen auf einen geschlossenen Lagerring in Fig. 3 bis 7 veranschaulicht sind. In der Darstellung gemäß Fig. 3 ist der auszusparende Ringsektor 17 des Lagerrings 19 durch einen Umfangsabschnitt 22 gebildet, der über keilförmige Kerben 21 abgegrenzt ist und der herauszubrechen ist.

Der Lagerring 19, der wie die Lageraufnahme Kreis- oder Ovalform aufweisen kann, wird zunächst in die Lageraufnahme 18 in geschlossener Ringform und bei Anordnung des auszubrechenden Umfangsabschnittes 22 in Überdeckung zum ausgesparten Ringsektor 17 des Lagerringes 18 eingesetzt, und zwar bevorzugt passend, so dass für den Lagerring 19 eine formhaltige Abstützung gegeben ist, die lediglich im Bereich des auszusparenden Ringsektors 17 fehlt, und der Umfangsabschnitt 22 des Lagerringes 19 entlang der Soll-Bruchstellen 20 ausgebrochen und aus dem Ringverbund gelöst werden kann, ohne dass der Lagerring 19 dadurch in seiner Formhaltigkeit beeinträchtigt wird.

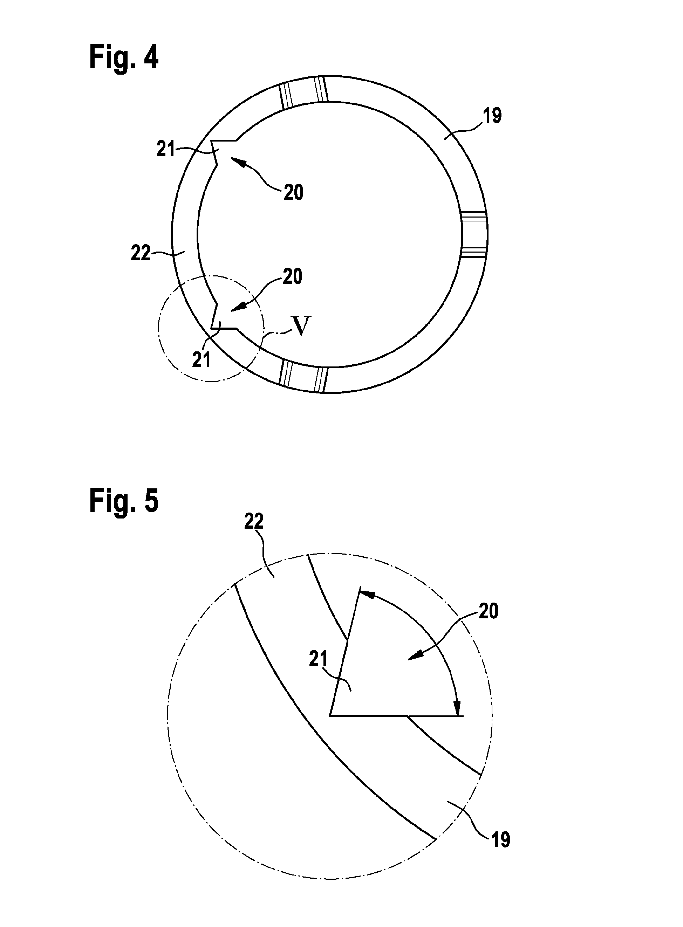

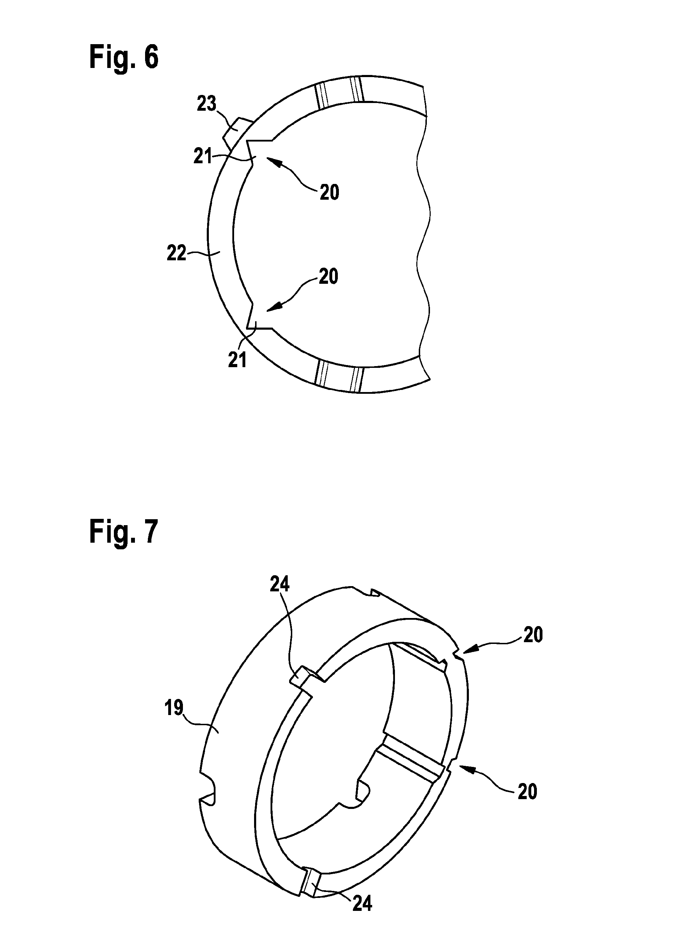

Die Fig. 3 bis 5 veranschaulichen die Ausbildung der als Trennstellen vorgesehenen Soll-Bruchstellen 20 als spitzwinklige Kerben 21, wie insbesondere die vergrößerte Darstellung gemäß Fig. 5 zeigt, wobei im Kerbgrund bezogen auf den geschlossenen, in der Umfangsform der Lageraufnahme 19 entsprechenden Lagerring 19 lediglich eine verhältnismäßig geringe Wandstärke verbleibt. Der Kerbwinkel liegt gemäß der Darstellung in Fig. 4 bevorzugt bei etwa 60 bis 80°. Soweit eine solche Ausgestaltung der Soll-Bruchstellen 20 durch die Wandstärke des Lagerringes 19 wesentlich schwächende keilförmige Kerben 21 oder auch rinnenförmig verrundete oder nutförmig eckige Vertiefungen bei der Fertigung des Lagerringes 19 zu Schwierigkeiten führt, was insbesondere beim Gießen oder auch Sintern des Lagerringes 19 der Fall sein kann, kann erfindungsgemäß, wie in Fig. 6 gezeigt, der der Vertiefung der jeweiligen insbesondere keilförmigen Kerbe 21 gegenüberliegende Umfangsbereich mit einer Aufdickung 23 versehen werden, so dass auch im Bereich der Kerben 21 zunächst durch die Aufdickung 23 ein der sonstigen Wandstärke des Lagerringes 19 entsprechender Wandquerschnitt gegeben ist. Die zum Einsetzen in die Lageraufnahme 18 erforderliche Entfernung der Aufdickung 23 kann nachfolgend abgetragen werden, beispielsweise durch Schleifen, Überdrehen oder dergleichen, so dass bei dieser fertigungsgegebenen Ausgestaltung des noch geschlossenen Lagerringes 19 nach Abtragen der Aufdickung 23 der Einsatz des Lagerringes 19 in die Lageraufnahme 18 wie vor geschildert erfolgen kann.

Grundsätzlich besteht auch die Möglichkeit, die Aufdickung 23 lediglich im zum auszubrechenden Umfangsbereich überdeckenden Bereich abzutragen und so im Übergang auf den ausgesparten Umfangsbereich 22 am Lagerring 19 Vorsprünge auszubilden, die durch radialen Übergriff oder Eingriff in die Lageraufnahme 18 eine Verdrehsicherung des Lagerringes 19 gewährleisten.

Eine solche Verdrehsicherung kann auch in anderer Weise, zum Beispiel gemäß Fig. 7 durch stirnseitige Aussparungen 24 am Lagerring 19 erreicht werden, zu denen korrespondierende Gegenstücke an der Lageraufnahme vorgesehen werden, die nicht gezeigt sind.

## Patentansprüche

1. Handwerkzeugmaschine, insbesondere ein Meißel- und/oder Bohrhammer, mit einem ein Werkzeug aufnehmenden Abtriebsglied (4), das in einem Lagerring (19) geführt ist, welcher in einer umgreifenden Lageraufnahme (18) angeordnet ist, **dadurch gekennzeichnet, dass** die Lageraufnahme (18) und der Lagerring (19) in offener Ringform mit in Überdeckung zueinander liegenden, ausgesparten Ringsektoren (17) ausgebildet sind und dass ein Umfangsabschnitt (22) des Lagerringes (19), der durch als Soll-Bruchstellen (20) ausgebildete Trennstellen abgegrenzt und herausgetrennt ist, dessen ausgesparten Ringsektor (17) bildet.

2. Handwerkzeugmaschine nach Anspruch 1, **dadurch gekennzeichnet, dass** der offene Lagerring (19) formhaltend von der kreisförmigen oder ovalen Lageraufnahme (18) aufgenommen ist.

3. Handwerkzeugmaschine nach Anspruch 1 oder 2, **dadurch gekennzeichnet, dass** der offene Lagerring (19) passend, insbesondere formschlüssig, in der Lageraufnahme (18) gehalten ist.

4. Handwerkzeugmaschine nach Anspruch 1, **dadurch gekennzeichnet, dass** die Soll-Bruchstellen (20) durch im Innen- und/oder Außenumfang des Lagerringes (19) vorgesehene Kerben (21) gebildet sind.

5. Handwerkzeugmaschine nach Anspruch 4, **dadurch gekennzeichnet, dass** die im Innen- und Außenumfang des Lagerringes (19) vorgesehenen Kerben (21) einander gegenüberliegend, insbesondere einander symmetrisch gegenüberliegend angeordnet sind.

6. Handwerkzeugmaschine nach Anspruch 5, **dadurch gekennzeichnet, dass** der Lagerring (19) im Überdeckungsbereich zu zumindest einer seiner am Innenumfang vorgesehenen Kerben (21) außenseitig aufgedickt ist.

7. Handwerkzeugmaschine nach Anspruch 6, **dadurch gekennzeichnet, dass** die Aufdickung (23) im Konturverlauf der Kontur der Kerbe (21) folgt.

8. Handwerkzeugmaschine nach Anspruch 7, **dadurch gekennzeichnet, dass** die Wandstärke des Lagerringes (19) im Bereich der Kerbe (21) durch die zur Kerbe 21 überdeckend liegende Aufdickung (23) in Annäherung gleich ist.

9. Handwerkzeugmaschine nach einem der Ansprüch 4 bis 8, **dadurch gekennzeichnet, dass** die Kerben (21) als Winkelnuten, insbesondere spitzwinklige Winkelnuten, ausgebildet sind.

10. Handwerkzeugmaschine nach einem der Anspruch 4 bis 9, **dadurch gekennzeichnet, dass** der Lagerring (19) zur drehsicheren Anordnung in einer Lageraufnahme (18) mit stirnseitigen Aussparungen (24), insbesondere Nuten, versehen ist.

11. Handwerkzeugmaschine nach einem der Ansprüche 4 bis 10, **dadurch gekennzeichnet, dass** der Lagerring (19) aus sprödbrechenden Materialien besteht, insbesondere durch einen Sintermetallkörper, gebildet ist.

## Claims

1. Hand-held power tool, in particular a chisel hammer and/or hammer drill, with an output member (4) which receives a tool and is guided in a bearing ring (19) which is arranged in a surrounding bearing receptacle (18), **characterized in that** the bearing receptacle (18) and the bearing ring (19) are designed in the form of an open ring with cut-out ring sectors (17) overlapping one another, and **in that** a circumferential portion (22) of the bearing ring (19), which circumferential portion is delimited and separated out by separation points designed as predetermined breaking points (20), forms the cut-out ring sector (17) of the said bearing ring.

2. Hand-held power tool according to Claim 1, **characterized in that** the open bearing ring (19) is received, so as to maintain its shape, by the circular or oval bearing receptacle (18).

3. Hand-held power tool according to Claim 1 or 2, **characterized in that** the open bearing ring (19) is held in the bearing receptacle (18) with a fit, in particular positively.

4. Hand-held power tool according to Claim 1, **characterized in that** the predetermined breaking points (20) are formed by notches (21) provided in the inner and/or outer circumference of the bearing ring (19).

5. Hand-held power tool according to Claim 4, **characterized in that** the notches (21) provided in the inner and outer circumference of the bearing ring (19) are arranged so as to lie opposite one another, in particular so as to lie symmetrically opposite one another.

6. Hand-held power tool according to Claim 5, **characterized in that** the bearing ring (19) is thickened on the outside in the overlap region with at least one of its notches (21) provided on the inner circumference.

7. Hand-held power tool according to Claim 6, **characterized in that** the contour profile of the thickening (23) follows the contour of the notch (21).

8. Hand-held power tool according to Claim 7, **characterized in that** the wall thickness of the bearing ring (19) in the region of the notch (21) is approximately identical as a result of the thickening (23) overlapping with the notch (21).

9. Hand-held power tool according to one of Claims 4 to 8, **characterized in that** the notches (21) are designed as angular grooves, in particular acute-angled grooves.

10. Hand-held power tool according to one of Claims 4 to 9, **characterized in that** the bearing ring (19) is provided with end-face cutouts (24), in particular grooves, for rotationally secure arrangement in a bearing receptacle (18).

11. Hand-held power tool according to one of Claims 4 to 10, **characterized in that** the bearing ring (19) consists of brittle-fracturing materials, in particular is formed by a sintered metal body.

## Revendications

1. Machine-outil à main, en particulier marteau burineur et/ou perforateur, comprenant un organe de sortie (4) recevant un outil, lequel organe de sortie est guidé dans une bague de palier (19) qui est disposée dans un logement de palier enveloppant (18), **caractérisée en ce que** le logement de palier (18) et la bague de palier (19) sont réalisés sous forme annulaire ouverte avec des secteurs annulaires évidés (17) situés en recouvrement les uns par rapport aux autres et **en ce qu'**une portion périphérique (22) de la bague de palier (19), qui est délimitée et séparée par des points de séparation réalisés sous forme de points destinés à la rupture (20), forme son secteur annulaire évidé (17).

2. Machine-outil à main selon la revendication 1, **caractérisée en ce que** la bague de palier ouverte (19) est reçue par le logement de palier circulaire ou ovale (18) de manière à maintenir sa forme.

3. Machine-outil à main selon la revendication 1 ou 2, **caractérisée en ce que** la bague de palier ouverte (19) est maintenue de manière ajustée, en particulier par engagement par complémentarité de formes, dans le logement de palier (18).

4. Machine-outil à main selon la revendication 1, **caractérisée en ce que** les points destinés à la rupture (20) sont formés par des entailles (21) prévues dans la périphérie intérieure et/ou extérieure de la bague de palier (19).

5. Machine-outil à main selon la revendication 4, **caractérisée en ce que** les entailles (21) prévues dans la périphérie intérieure et extérieure de la bague de palier (19) sont disposées en regard les unes des autres, en particulier symétriquement en regard les unes des autres.

6. Machine-outil à main selon la revendication 5, **caractérisée en ce que** la bague de palier (19) est épaissie du côté extérieur dans la région de recouvrement par rapport à au moins l'une de ses entailles (21) prévues sur la périphérie intérieure.

7. Machine-outil à main selon la revendication 6, **caractérisée en ce que** le profil de contour de l'épaississement (23) suit le contour de l'entaille (21).

8. Machine-outil à main selon la revendication 7, **caractérisée en ce que** l'épaisseur de paroi de la bague de palier (19) dans la région de l'entaille (21) est approximativement identique en raison de l'épaississement (23) situé en recouvrement par rapport à l'entaille (21).

9. Machine-outil à main selon l'une quelconque des revendications 4 à 8, **caractérisée en ce que** les entailles (21) sont réalisées sous forme de rainures angulaires, en particulier sous forme de rainures angulaires à angle aigu.

10. Machine-outil à main selon l'une quelconque des revendications 4 à 9, **caractérisée en ce que** la bague de palier (19) est, en vue de l'agencement de manière bloquée en rotation dans un logement de palier (18), pourvue d'évidements frontaux (24), en particulier de rainures.

11. Machine-outil à main selon l'une quelconque des revendications 4 à 10, **caractérisée en ce que** la bague de palier (19) est constituée de matériaux à rupture fragile, en particulier est formée par un corps en métal fritté.
